# EUROPÄISCHE PATENTANMELDUNG

(11) **EP 1 253 388 A1**
(43) Veröffentlichungstag der Anmeldung: **30.10.2002**
(21) Anmeldenummer: 02008751.6
(22) Anmeldetag: 18.04.2002
(51) Int. Cl.: F25J 1/00, F02C 3/00

(54) **Verfahren und Vorrichtung zur Verflüssigung von Erdgas**

(30) Priorität: 23.04.2001 DE 10119761
(71) Anmelder: Linde Aktiengesellschaft, 65189 Wiesbaden (DE); Den Norske Stats Oljeselskap A.S., 4035 Stavanger (NO)
(72) Erfinder: Bölt, Manfred, 82194 Gröbenzell (DE); Sapper, Rainer, 82335 Aufkirchen (DE); Stockmann, Rudolf, 86807 Buchloe (DE); Paurola, Pentti, 4046 Hafrsfjord (NO)
(74) Vertreter: Kasseckert, Rainer

(57) **Zusammenfassung**

Es werden ein Verfahren und eine Vorrichtung zur Verflüssigung von Erdgas beschrieben. Für einen zuverlässigen Betrieb der bei Erdgasverflüssigungsanlagen vorhandenen Kompressoren wird vorgeschlagen, die Energie für den Antrieb der Kompressoren aus der Verbrennung eines Teils des verflüssigten Erdgases (D1) zu gewinnen. Insbesondere können Gasturbinen mit verdampftem (E1, E2) Flüssigerdgas als Brenngas betrieben werden. Auf diese Weise steht Brenngas mit homogener Zusammensetzung und gleichbleibendem Heizwert zur Verfügung, das sich auch für moderne Gasturbinen eignet, welche empfindlich auf Schwankungen der Zusammensetzung und des Heizwertes des Brenngases reagieren.

## Beschreibung

Die Erfindung betrifft ein Verfahren zur Verflüssigung von Erdgas unter Verwendung von mindestens einem Kältekreislaufstrom, der mittels mindestens eines Kompressors komprimiert wird, sowie eine Vorrichtung zur Durchführung des Verfahrens.

Erdgas wird in sogenannten LNG Baseload Anlagen, d. h. Anlagen zur Grundlastversorgung mit verflüssigtem Erdgas (LNG = Liquefied Natural Gas) verflüssigt, um an anderen Orten zur Versorgung des Energiemarktes mit Erdgas als Primärenergie zu dienen. Derartige Anlagen weisen in der Regel mehrere Kältekreisläufe mit Kompressoren zur Kompression der Kältekreislaufströme auf. Zur Kompression der Kältekreislaufströme werden große Energiemengen benötigt. Üblicherweise werden die Kompressoren mittels Gasturbinen angetrieben, die mit Brennstoffen versorgt werden. Die bei der Verbrennung der Brennstoffe in den Gasturbinen erzeugte Energie wird entweder direkt an die Kompressorantriebswellen übertragen oder zur Stromerzeugung mittels Generatoren benutzt, um mit dem erzeugten elektrischen Strom elektrische Antriebsmotoren zu betreiben, die die Kompressoren antreiben. Zur Versorgung der Gasturbinen mit Brennstoffen werden oft Restgase oder Gase aus dem Verflüssigungsprozess zum Beispiel aus der Stickstoffentfernung oder auch Rohgas verwendet. Diese Brenngase werden in Brenngaskompressoren auf die notwendigen Brenngasdrücke von ca. 20 bis ca. 30 bara verdichtet. Um den Energieverbrauch für die Kompression der Kältekreislaufströme möglichst niedrig zu halten, versucht man, die neuesten verfügbaren Gasturbinen mit höchsten Wirkungsgraden einzusetzen. Diese sogenannten Air-Derivative-Gasturbinen benötigen zum Betrieb Brenngase mit etwas höheren Drücken als übliche Gasturbinen. Außerdem reagieren sie empfindlich auf geringe kurzfristige und mittelfristige Zusammensetzungsveränderungen oder Heizwertschwankungen des Brenngases. Kritisch für den Betrieb der hocheffektiven Gasturbinen sind beispielsweise bereits Schwankungen des Heizwertes oder der spezifischen Dichte oder des Wobbe Indexes des Brenngases von +/- 1% innerhalb von 30 Sekunden. Dies bedeutet, dass ein kontinuierlicher Betrieb dieser Gasturbinen mit den bisher eingesetzten Brenngasen nicht sichergestellt werden kann, da aufgrund möglicher Gasturbinenausfälle die Verfügbarkeit des Erdgasverflüssigungsprozesses insgesamt nicht gewährleistet werden kann. Die daraus resultierende verringerte Verfügbarkeit des Erdgasverflüssigungsprozesses würde zu einer Verringerung der jährlich produzierten Menge an verflüssigtem Erdgas führen.

Der vorliegenden Erfindung liegt daher die Aufgabe zugrunde, ein Verfahren der eingangs genannten Art sowie eine Vorrichtung zur Durchführung des Verfahrens zur Verfügung zu stellen, mit denen ein zuverlässiger und wirtschaftlicher Betrieb der Kompressoren ermöglicht wird.

Verfahrensseitig wird diese Aufgabe erfindungsgemäß dadurch gelöst, dass der Kompressor durch Energie aus der Verbrennung eines Teils des verflüssigten Erdgases angetrieben wird.

Die Antriebsenergie für den Betrieb der Kompressoren wird also durch Verbrennung von verflüssigtem Erdgas, dem sogenannten LNG, zur Verfügung gestellt. Verflüssigtes Erdgas ist jederzeit vorhanden, da bereits zum Anfahren der Erdgasverflüssigungsanlage verflüssigtes Erdgas in Vorratsbehälter eingefüllt wird und während des Betriebs der Verflüssigungsanlage kontinuierlich verflüssigtes Erdgas produziert wird, welches in Vorratsbehälter eingeleitet wird. Aufgrund der im Betrieb der Erdgasverflüssigungsanlage eingestellten Spezifikation verfügt das verflüssigte Erdgas über eine sehr konstante Zusammensetzung und einen konstanten Heizwert. Somit können auch hocheffektive Gasturbinen der neuesten Generation, welche kritisch auf Schwankungen der Zusammensetzung oder des Heizwertes des Brenngases reagieren, mit dem verflüssigten Erdgas betrieben werden.

Für den Antrieb der Kompressoren können prinzipiell alle denkbaren brennstoffbetriebenen Antriebsaggregate verwendet werden. Zweckmäßigerweise werden Gasturbinen, insbesondere solche der neuesten Generation mit hohen Wirkungsgraden eingesetzt. In der Praxis wird das durch Verdampfen eines Teils des aus dem verflüssigten Erdgas gewonnene Brenngas mindestens einer Gasturbine zur Verbrennung zugeführt, die mindestens einen Kompressor mechanisch antreibt. Die Gasturbine kann aber auch zum Antrieb eines Generators zur Stromerzeugung eingesetzt werden, wobei mit dem erzeugten Strom mindestens ein Elektromotor betrieben wird, der mindestens einen Kompressor antreibt. Hierzu wird zweckmäßigerweise ein Teil des verflüssigten Erdgases mittels einer Pumpe dem Vorratstank für verflüssigtes Erdgas entnommen und der Gasturbine zugeführt. Für das Erreichen des notwendigen Brenngasdrucks reicht eine Pumpe innerhalb oder außerhalb des Vorratstanks und ggf. eine weitere Pumpe außerhalb des Vorratstanks aus. Dies bedeutet, dass durch die Verwendung von verflüssigtem Erdgas der für die Gasturbinen erforderliche Brenngasdruck mit relativ geringem Energieaufwand und niedrigen Investitionskosten erreicht werden kann. Auf eine teure und energieintensive Kompression von Brenngas in speziellen Brenngaskompressoren, wie dies beim Stand der Technik erforderlich ist, kann verzichtet werden.

Zweckmäßigerweise wird der für die Verwendung als Brenngas vorgesehene Teil des verflüssigten Erdgases durch Anwärmen in den gasförmigen Zustand überführt. Die Anwärmung des verflüssigten Erdgases erfolgt dabei vorzugsweise durch Wärmetausch mit bei der Erdgasverflüssigung ohnehin vorhandenen Strömen. Mit Vorteil wird das verflüssigte Erdgas mit einem Teilstrom eines Kopfproduktes einer Kolonne zur Abtrennung von schweren Kohlenwasserstoffen aus dem Erdgas in Wärmetausch gebracht. Zusätzlich oder alternativ kann das verflüssigte Erdgas durch Wärmetausch mit einem bei der Erdgasverflüssigung vorhandenen Unterkühlungskreislauf angewärmt werden. Gemäß einer besonders bevorzugten Ausführungsform wird das flüssige komprimierte Erdgas in einem oder in zwei aufeinander folgenden Wärmetauschern im Gegenstrom gegen einen abgetrennten Teilstrom des Kopfproduktes der Kolonne zur Abtrennung von schweren Kohlenwasserstoffen aus einem Rücklaufbehälter, der ca. 5 % bis 10 % des Rohgases beträgt, und gegen einen abgetrennten Teilstrom des Unterkühlungskreislaufs (SC = Subcooling Cycle), der ca. 5 % bis 10 % des Unterkühlungskreislaufstromes beträgt, verdampft.

Eine andere Variante der Erfindung sieht vor, einen Teil des verflüssigten Erdgases zur Gewinnung als Brenngas mit einem Teilstrom des zu verflüssigenden Rohgases in Wärmetausch zu bringen. Außerdem kann das verflüssigte Erdgas auch durch Aufheizen mit einem externen Heizmedium, insbesondere Heißdampf oder Heißöl, oder mit einer elektrischen Heizung angewärmt werden.

In einer besonders praxisgerechten Ausführungsform der Erfindung wird aus einem Vorratstank für verflüssigtes Erdgas ein Teil des verflüssigten Erdgases abgepumpt, anschließend angewärmt und bei ca. 30 bis ca. 50 bar zu Brenngas verdampft und das Brenngas schließlich der Gasturbine zur Verbrennung zugeführt.

Die Erfindung betrifft ferner eine Vorrichtung zur Verflüssigung von Erdgas mit mindestens einem Kältekreislauf und mindestens einem Kompressor zur Kompression des Kältekreislaufstromes, wobei der Kompressor mit mindestens einem brennstoffbetriebenen Antriebsaggregat in Wirkverbindung steht.

Vorrichtungsseitig wird die gestellte Aufgabe dadurch gelöst, dass das Antriebsaggregat über eine Brennstoffzufuhrleitung mit einem Vorratsbehälter für verflüssigtes Erdgas in Verbindung steht.

Das Antriebsaggregat ist zweckmäßigerweise als Gasturbine ausgebildet. Außerdem ist in die Brennstoffzufuhrleitung mindestens ein Wärmetauscher zum Anwärmen des verflüssigten Erdgases eingeschaltet. Der Wärmetauscher ist vorzugsweise mit einer Kopfproduktabzugsleitung einer Kolonne zur Abtrennung von schweren Kohlenwasserstoffen aus dem Erdgas verbunden. Zusätzlich oder alternativ kann der Wärmetauscher auch mit einem Unterkühlungskreislauf der Erdgasverflüssigungsanlage verbunden sein. Der Wärmetauscher kann auch mit einer Rohgasteilstromleitung, die von der Zuführungsleitung zur Erdgasverflüssigungsanlage abzweigt, in Verbindung stehen.

Die Erfindung bietet eine Reihe von Vorteilen.

Für den Betrieb von hocheffizienten Gasturbinen nach dem neuesten Stand der Technik, der sogenannten Air-Derivative Gasturbinen, wird ein bezüglich Zusammensetzung und Heizwert stabiles Brenngas zur Verfügung gestellt. Somit wird die Wahrscheinlichkeit für den Ausfall der Gasturbinen aufgrund von schwankenden Qualitäten des Brenngases auf ein Minimum reduziert. Durch die Verdampfung des verflüssigten Erdgases gegen einen Rohgasteilstrom oder einen Kreislaufteilstrom wird die verfügbare Kälte des verflüssigten Erdgases praktisch vollständig zurückgewonnen. Der hohe Energieaufwand zur Kompression des Brenngases im gasförmigen Zustand wie bei den bekannten Anlagen ist nicht erforderlich. Die Investitionskosten der Flüssigkeitspumpen zur Kompression auf Brenngasdruck sind geringer als die erforderlichen Investitionskosten für die Brenngaskompressoren bei den bekannten Anlagen. Mit den vorgesehenen Wärmeaustauschern kann die Temperatur des Brenngases mit dem erforderlichen Abstand zum Taupunkt eingestellt werden. Insgesamt wird die wichtigste Zielsetzung, ein bezüglich Zusammensetzung und Heizwert konditioniertes und zeitlich stabiles Brenngas zum Gasturbinenbetrieb zur Verfügung zu stellen, auf technisch elegante und wirtschaftliche Weise erreicht. Damit kann der Nachteil einer geringeren Verflüssigungskapazität der Erdgasverflüssigungsanlage bei der Verwendung üblicher Gasturbinen mit niedrigeren Wirkungsgraden vermieden werden.

Im Folgenden wird die Erfindung anhand von in den Figuren schematisch dargestellten Ausführungsbeispielen näher erläutert:

Es zeigen
- Figur 1: ein Fließbild für ein Verfahren zur Konditionierung von Brenngas für Gasturbinen in einer Erdgasverflüssigungsanlage
- Figur 2 und Figur 3: Varianten des in Figur 1 gezeigten Verfahrens mit unterschiedlichen Wärmetauscherausführungsformen.

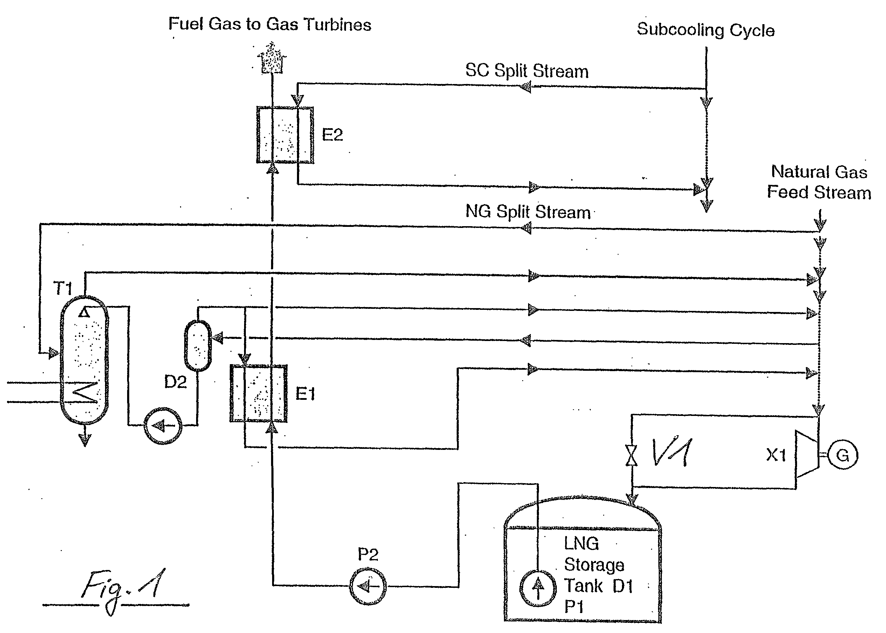

Aus dem in **Figur 1** dargestellten Vorratstank D1 für verflüssigtes Erdgas wird mit einer Pumpe P1 die für den Betrieb der Gasturbinen notwendige Brenngasmenge als verflüssigtes Erdgas abgepumpt. Die Kompression auf den notwendigen Brenngasdruck kann vollständig mit der im Vorratstank D1. befindlichen Pumpe P1 oder der außerhalb angeordneten Pumpe P2 oder auch in zwei Schritten durchgeführt werden. Dies bedeutet, dass die Kompression auch mit einer im Vorratstank D1 befindlichen Pumpe P1 und mit einer zweiten Pumpe P2 außerhalb des Vorratstanks D1 durchgeführt werden kann, um zum Beispiel den Wärmeeintrag und damit die sogenannte Boil-Off-Gas Menge des Vorratstanks D1 zu minimieren. In einem Wärmetauscher E1 wird das verflüssigte Erdgas gegen einen Teilstrom des Gasstromes aus dem Rücklaufbehälter D2 der HHC Kolonne T1 (Kolonne zur Abtrennung von schweren Kohlenwasserstoffen) in den gasförmigen Zustand bei 30 bar bis 50 bar überführt. In einem weiteren Wärmetauscher E2 wird der kalte Brenngasstrom gegen einen Teilstrom des Unterkühlungskreislaufs (SC = Subcooling Cycle) auf Umgebungstemperatur angewärmt und die erforderliche Überhitzung zur Taupunktstemperatur eingestellt. Der durch das sich anwärmende, gepumpte verflüssigte Gas gekühlte Teilstrom des Kopfproduktes der HHC Kolonne T1 ist am Austritt des Wärmetauschers E1 verflüssigt und ausreichend unterkühlt, so dass er mit dem Hauptstrom des verflüssigten unterkühlten Erdgases des Prozesses wieder vermischt werden kann. Der gemischte unterkühlte Erdgasstrom kann dann über eine Flüssigexpansionsturbine X1 oder ein Joule-Thompson-Ventil V1 in den Vorratstank D1 eingespeist werden. Dies bedeutet, dass auch der abgespaltene Kopfproduktstrom zur Kälteerzeugung genutzt wird.

Der ebenfalls zur Anwärmung verwendete Teilstrom des Unterkühlungskreislaufs (SC = Subcooling Cycle) tritt zweiphasig aus dem Wärmetauscher E2 aus und wird wieder zum zweiphasigen Hauptstrom des Unterkühlungskreislaufs gemischt. Aufgrund der stabilen Temperaturverhältnisse und herrschenden Verfahrensdrücke können die Wärmetauscher E1 und E2 als Aluminiumplattenwärmetauscher ausgeführt werden. Auch die Verwendung von gewickelten Wärmetauschern oder geschweißten Edelstahl-Plattentauschern ist vorteilhaft. Die Wärmetauscher E1 und E2 können in einer anderen Variante auch zu einem Wärmetauscher zusammengeführt werden, wobei dieser als Aluminiumplattenwärmetauscher oder gewickelter Wärmetauscher ausgebildet sein kann.

Die Anwärmung des Brenngasstromes im Wärmetauscher E2 kann alternativ zur Anwärmung gegen einen Teilstrom des Unterkühlungskreislaufs auch gegen folgende Teilströme ausgeführt werden:
- einen Teilstrom des trockenen in den Verflüssigungsteil der Anlage eintretenden Erdgasstromes oder
- einen in die Anlage eintretenden Teilstrom eines anderen Kältekreislaufes, zum Beispiel gegen einen Teilstrom des Verflüssigungskreislaufs (LC = Liquefaction Cycle) oder des Vorkühlungskreislaufs (PC = Precooling Cycle).

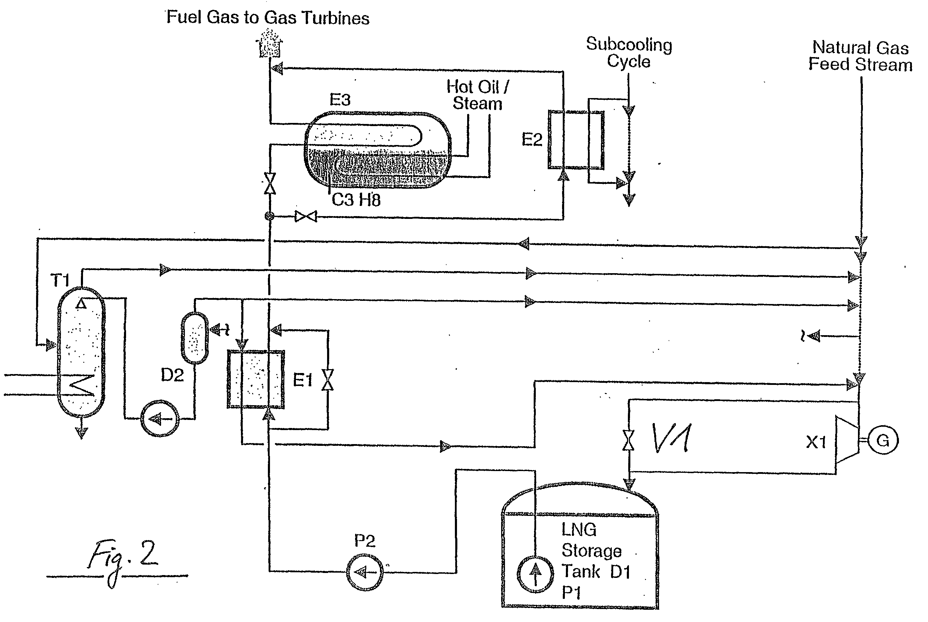

Bei der in **Figur 2** dargestellten Variante erfolgt die Anwärmung des auf Brenngasdruck gepumpten verflüssigten Erdgases in den Wärmetauschern E1 und E3 oder ausschließlich im Wärmetauscher E3. Dabei ist der Wärmetauscher E3 folgendermaßen ausgebildet: Der Wärmetauscher enthält zwei Rohrbündel, wobei ein Rohrbündel durch Hochdruckdampf oder mit Heißöl beheizt wird. Im zweiten Rohrbündel wird das flüssige Erdgas oder das bereits im Wärmetauscher E1 verdampfte und nun gasförmige Erdgas geführt. Beide Rohrbündel befinden sich in einem geschlossenen Behälter, der zur Wärmeübertragung zwischen den beiden Rohrbündeln mit einem Übertragungsmedium gefüllt ist. Als Wärmeübertragungsmedium wird ein Medium gewählt, das in dem Temperaturbereich zwischen dem Heizmedium, nämlich Dampf oder Heißöl von ca. 100 °C bis ca. 250 °C, und dem verdampfenden bzw. sich anwärmenden flüssigen Erdgas von ca. - 160 °C bis - 50 °C unter mittleren Drücken von etwa 10 - 25 bar verdampft bzw. kondensiert. Außerdem sollte das Medium gute Wärmeübertragungseigenschaften aufweisen und der Schmelzpunkt sollte unterhalb ca. - 160 °C liegen. Folgende Medien kommen z.B. in Betracht: Ethan, Propan, Propylen. Im vorliegenden Beispiel wurde Propan ausgewählt. Für Propan wurde ein Siededruck von 12 bar gewählt, das entspricht einer Siedetemperatur von 34 °C. Die in Figur 2 dargestellte Anordnung zur Verdampfung bzw. Anwärmung des flüssigen Erdgases in dem Wärmetauscher E3 ist eine Möglichkeit, die in einer Phase des Anfahrens, bis die entsprechenden Kältekreisläufe in Betrieb gesetzt wurden, benutzt werden kann. Dabei wird das aus dem Vorratstank D1 gepumpte verflüssigte Erdgas mit einem Bypaß um Wärmetauscher E1 direkt zum Wärmetauscher E3 geführt und dort verdampft und angewärmt.

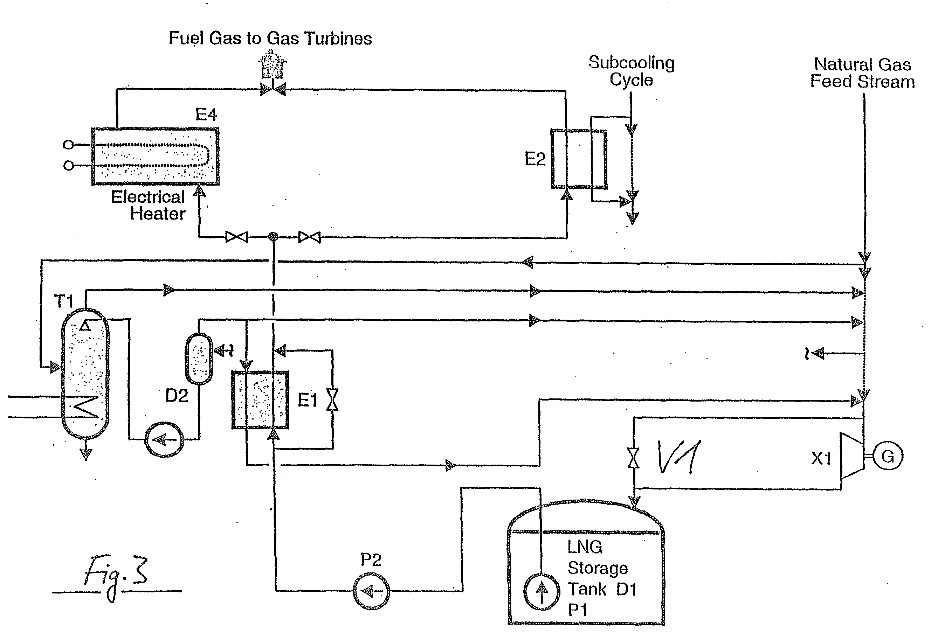

In **Figur 3** ist eine Variante des Verfahrens dargestellt, bei der anstelle der Anwärmung des auf Brenngasdruck gepumpten flüssigen Erdgases in den Wärmetauschern E1 und E2 die Anwärmung im Wärmetauscher E4 erfolgt. Der Wärmetauscher E4 wird als elektrische Heizung ausgebildet. Die elektrische Heizung wird für einen Dauerbetrieb oder nur für den Anfahrbetrieb dimensioniert. Diese Anordnung ist eine weitere Möglichkeit, die während des Anfahrens, d.h. bis die entsprechenden Kältekreisläufe in Betrieb gesetzt sind, benutzt werden kann.

## Patentansprüche

1. Verfahren zur Verflüssigung von Erdgas unter Verwendung von mindestens einem Kältekreislaufstrom, der mittels mindestens eines Kompressors komprimiert wird, **dadurch gekennzeichnet, dass** der Kompressor durch Energie aus der Verbrennung eines Teils des verflüssigten Erdgases angetrieben wird.

2. Verfahren nach Anspruch 1, **dadurch gekennzeichnet, dass** durch Verdampfen eines Teils des verflüssigten Erdgases gewonnenes Brenngas mindestens einer Gasturbine zur Verbrennung zugeführt wird, die mindestens einen Kompressor mechanisch antreibt.

3. Verfahren nach Anspruch 1, **dadurch gekennzeichnet, dass** durch Verdampfen eines Teils des verflüssigten Erdgases gewonnenes Brenngas mindestens einer Gasturbine zur Verbrennung zugeführt wird, die mindestens einen Generator zur Stromerzeugung antreibt, wobei mit dem erzeugten Strom mindestens ein Elektromotor betrieben wird, der mindestens einen Kompressor antreibt.

4. Verfahren nach einem der Ansprüche 1 bis 3, **dadurch gekennzeichnet, dass** der Teil des verflüssigten Erdgases angewärmt wird.

5. Verfahren nach Anspruch 4, **dadurch gekennzeichnet, dass** die Anwärmung des verflüssigten Erdgases durch Wärmetausch mit einem bei der Erdgasverflüssigung vorhandenen Kreislaufstromes durchgeführt wird.

6. Verfahren nach Anspruch 4 oder 5, **dadurch gekennzeichnet, dass** die Anwärmung des verflüssigten Erdgases durch Wärmetausch mit einem Teilstrom eines Kopfproduktes einer Kolonne zur Abtrennung von schweren Kohlenwasserstoffen aus dem Erdgas durchgeführt wird.

7. Verfahren nach einem der Ansprüche 4 bis 6, **dadurch gekennzeichnet, dass** die Anwärmung des verflüssigten Erdgases durch Wärmetausch mit einem Teilstrom eines bei der Erdgasverflüssigung vorhandenen Unterkühlungskreislaufes durchgeführt wird.

8. Verfahren nach einem der Ansprüche 4 bis 7, **dadurch gekennzeichnet, dass** die Anwärmung des verflüssigten Erdgases durch Wärmetausch mit einem Teilstrom des zu verflüssigenden Rohgases durchgeführt wird.

9. Verfahren nach einem der Ansprüche 4 bis 8, **dadurch gekennzeichnet, dass** die Anwärmung des verflüssigten Erdgases durch Aufheizen mit einem externen Heizmedium, insbesondere Heißdampf oder Heißöl, durchgeführt wird.

10. Verfahren nach einem der Ansprüche 4 bis 9, **dadurch gekennzeichnet, dass** die Anwärmung des Erdgases mit einer elektrischen Heizung durchgeführt wird.

11. Verfahren nach einem der Ansprüche 2 bis 10, **dadurch gekennzeichnet, dass** aus einem Vorratstank für verflüssigtes Erdgas ein Teil des verflüssigten Erdgases abgepumpt, anschließend angewärmt und bei ca. 30 bis ca. 50 bar zu Brenngas verdampft und das Brenngas schließlich der Gasturbine zur Verbrennung zugeführt wird.

12. Vorrichtung zur Verflüssigung von Erdgas mit mindestens einem Kältekreislauf und mindestens einem Kompressor zur Kompression des Kältekreislaufstromes, wobei der Kompressor mit mindestens einem brennstoffbetriebenen Antriebsaggregat in Wirkverbindung steht, **dadurch gekennzeichnet, dass** das Antriebsaggregat über eine Brennstoffzufuhrleitung mit einem Vorratsbehälter für verflüssigtes Erdgas in Verbindung steht.

13. Vorrichtung nach Anspruch 12, **dadurch gekennzeichnet, dass** das Antriebsaggregat als Gasturbine ausgebildet ist.

14. Vorrichtung nach Anspruch 12 oder 13, **dadurch gekennzeichnet, dass** in die Brennstoffzufuhrleitung mindestens ein Wärmetauscher zum Anwärmen des verflüssigten Erdgases eingeschaltet ist.

15. Vorrichtung nach Anspruch 14, **dadurch gekennzeichnet, dass** der Wärmetauscher mit einer Kopfproduktabzugsleitung einer Kolonne zur Abtrennung von schweren Kohlenwasserstoffen aus dem Erdgas verbunden ist.

16. Vorrichtung nach Anspruch 14 oder 15, **dadurch gekennzeichnet, dass** der Wärmetauscher mit einem Unterkühlungskreislauf, Verflüssigungskreislauf oder Vorkühlungskreislauf der Erdgasverflüssigungsanlage verbunden ist.

17. Vorrichtung nach einem der Ansprüche 14 bis 16, **dadurch gekennzeichnet, dass** der Wärmetauscher mit einer Rohgasteilstromleitung verbunden ist.

18. Vorrichtung nach einem der Ansprüche 14 bis 17, **dadurch gekennzeichnet, dass** der Wärmetauscher mit einer externen Beheizung ausgestattet ist, die elektrisch oder mit Heißöl oder mit Heißdampf betreibbar ist.
